Europäisches Patentamt

European Patent Office

Office européen des brevets

(19)

(11) Veröffentlichungsnummer: **0 146 829**
**A2**

(12) # EUROPÄISCHE PATENTANMELDUNG

(21) Anmeldenummer: **84114622.8**

(22) Anmeldetag: **01.12.84**

(51) Int. Cl.⁴: **G 01 B 17/00**

(30) Priorität: **07.12.83 SE 8306753**

(43) Veröffentlichungstag der Anmeldung:
**03.07.85 Patentblatt 85/27**

(84) Benannte Vertragsstaaten:
**AT BE CH DE FR GB IT LI NL**

(71) Anmelder: **ASEA AB**

**S-721 83 Västeras(SE)**

(72) Erfinder: **Brogardh, Torgny, Prof.**
**Platverksgatan 140**
**S-724 74 Västeras(SE)**

(72) Erfinder: **Hermansson, Willy, Dipl.-Ing.**
**Hakentorpsgatan 49**
**S-724 76 Västeras(SE)**

(74) Vertreter: **Boecker, Joachim, Dr.-Ing.**
**Rathenauplatz 2-8**
**D-6000 Frankfurt a.M. 1(DE)**

(54) **Ultraschallmessanordnung.**

(57) Eine Ultraschallmeßanordnung hat einen Geber (3), der Ultraschallimpulsee auf ein Objekt (1) sendet zur Bestimmung einer geometrischen Eigenschaft des Objektes, wie z.B. der Lage oder der Winkelstellung. Die Meßanordnung enthält eine Steuervorrichtung (4), welche das Aussenden der Impulse steuert und eine Signalverarbeitungseinheit (5, 6), welche für jeden ausgesandten Schallimpuls die Größen von zumindest zwei Echoimpulsen vergleicht, die von reflektierenden Flächen mit unterschiedlicher Entfernung zur Meßanordnung stammen. In Abhängigkeit des so gewonnenen Vergleichswertes wird ein Signal (Δ) abgegeben, welches der genannten Eigenschaft des Objektes entspricht.

FIG. 1

ASEA AB
S-721 83 Västeras/Schweden

Ultraschallmeßanordnung

Die vorliegende Erfindung betrifft eine Ultraschallmeßanordnung gemäß dem Oberbegriff des Anspruches 1.

Eine Meßanordnung der hier behandelten Art wird insbesondere bei der adaptiven Steuerung von Industrierobotern verwendet, wobei unter anderem folgende Funktionen verlangt werden können:

Das Entlangfahren längs einer durch das aneinandergrenzen von Flächen gebildeten Außen- oder Innenkante, Positionsbestimmung, Abstandmessung, Messung der Orientierung (Winkelstellung) von Flächen.

Diese Meßfunktionen sind u.a. von großer Bedeutung zum Montieren, Schweißen, Leimen, Entgraden und Überprüfen.

Es ist bekannt, für diese Zwecke optische Anordnungen zu verwenden, die nach einem Triangulationsprinzip arbeiten. Diese Anordnungen sind relativ teuer, schwer und platzraubend, u.a. wegen der dabei erforderlichen optischen Elemente, wie zum Beispiel Linsen. Diese bekannten Anordnungen haben ferner den Nachteil, daß sie in einer stark verunreinigenden Atmosphäre (zum Beispiel Schweißdämpfe, Staub) nicht zufriedenstellend arbeiten.

Bekannte magnetische und kapazitive Geber, beispielsweise zur Abstandsmessung, haben nur kleine Meßbereiche und können nur zum Messen bei bestimmten Materialien verwendet werden, wodurch ihr Anwendungsbereich stark eingeschränkt ist.

Bekannte Ultraschallmeßanordnungen zur Abstandmessung basieren auf dem Impulsechoprinzip, so daß ihre Meßwerte von dem Wert der Schallgeschwindigkeit in dem jeweils vorhandenen Medium abhängig sind, durch welches die Ultraschallsignale laufen. Der Wert der Schallgeschwindigkeit ist verhältnismäßig stark abhängig beispielsweise von der Temperatur und der Zusammensetzung des Mediums, wodurch genaue Messungen in vielen Anwendungsfällen erschwert oder gar unmöglich werden.

Der Erfindung liegt die Aufgabe zugrunde, eine Ultraschallmeßanordnung der eingangs genannten Art zu entwickeln, welche sich durch folgende Eigenschaften auszeichnet: Robustheit, Dauerhaftigkeit auch in ungünstiger Umgebung, kleines Volumen, kleines Gewicht, Verwendbarkeit für die meisten Materialarten, Möglichkeit zur gleichzeitigen Messung mehrerer Parametern und einfacher und damit kostengünstiger Aufbau.

Zur Lösung dieser Aufgabe wird eine Ultraschallmeßanordnung gemäß dem Oberbegriff des Anspruches 1 vorgeschlagen, welche erfindungsgemäß die im kennzeichnenden Teil des Anspruches 1 genannten Merkmale hat.

Vorteilhafte Ausgestaltungen der Erfindung sind in den weiteren Ansprüchen genannt.

Anhand der in den Figuren gezeigten Ausführungsbeispiele soll die Erfindung näher erläutert werden. Es zeigen

Figur 1 der prinzipielle Aufbau einer Meßanordnung nach der Erfindung zur Erläuterung des Meßprinzips,

Figur 1A und 1B eine genauere Darstellung eines Ausführungsbeispiels für einen in der Meßanordnung verwendeten Ultraschallgeber,

Figur 2 Zeitdiagramme zur Erläuterung des Wirkungsprinzips der Erfindung,

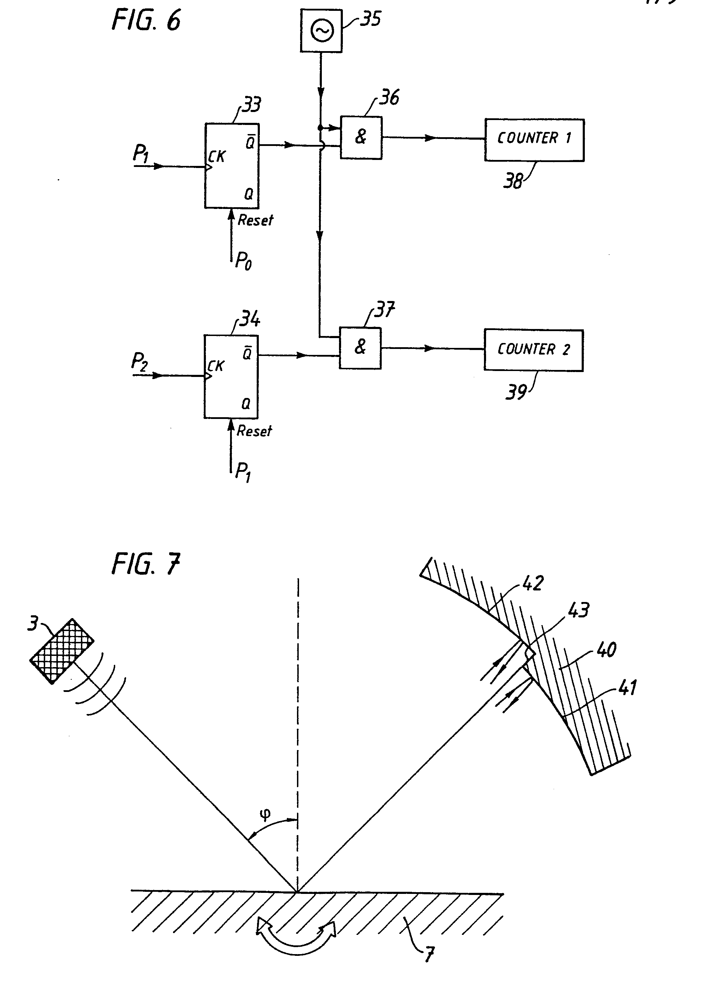

Figur 3 bis 6 verschiedene Ausführungsformen von elektronischen Schaltungen für die Echosignalverarbeitung,

Figur 7 das von der Meßanordnung gemäß der Erfindung verwendete Prinzip zur Winkelmessung,

Figur 8 und 9 die Verwendung der Meßanordnung nach der Erfindung zur Messung der Winkellage einer Fläche im dreidimensionalen Raum,

Figur 10 eine Anordnung zur trigonometrischen Messung des Abstandes zu einer Meßfläche,

Figur 11 eine Geberkonfiguration zur Messung der Lage und des Winkels einer Ecke,

Figur 12 und 13 Anordnungen zur Messung des Durchmessers oder der Form eines Objektes,

Figur 14 eine Anordnung zur binären Kodierung einer Lageinformation,

Figur 15 einen Industrieroboter mit einer Meßanordnung nach der Erfindung.

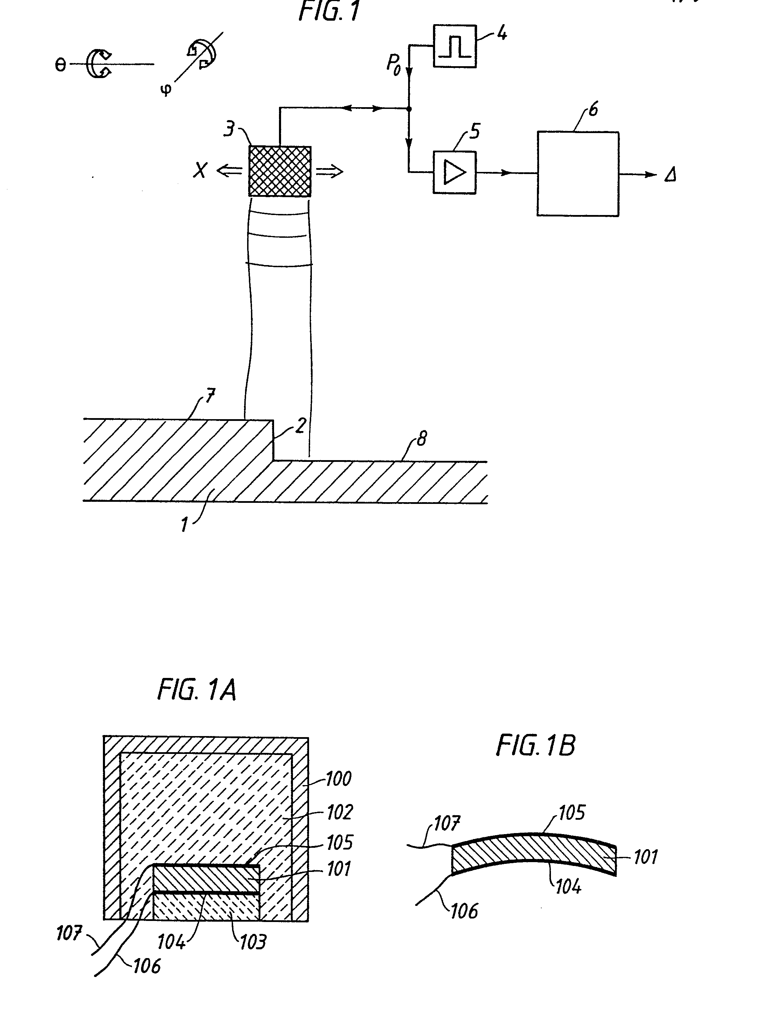

Figur 1 zeigt schematisch den Aufbei einer Meßanordnung nach der Erfindung zum Messen der Position einer Kante 2 eines Meßobjektes 1. Ein Impulsgenerator 4 regt einen Ultraschallgeber 3 an, der ein Ultraschallsignal auf das Meßobjekt sendet. Das Ultraschallsignal wird sowohl von der höher gelegenen Fläche 7 als auch von der tiefer gelegenen Fläche 8 des Meßobjektes reflektiert. Das Reflexionssignal an den Ultraschallgeber enthält daher zwei Echos. Durch starke Dämpfung der Schwingung des Ultraschallkristalls erhält man so kurze Impulse, daß die von den an die Kante 2 angrenzenden Flächen 7 und 8 reflektierten Signale durch die Laufzeitdifferenz voneinander getrennt werden. Die von dem Ultraschallgeber 3 empfangenen reflektierten Signale werden in einem Verstärker 5 verstärkt und einer Signalverarbeitungseinheit 6 zugeführt, in der ein Signal $\Delta$ gebildet wird, welches die Abweichung des Ultraschallgebers 3 in seitlicher Richtung (x-Richtung) von der Kante 2 beschreibt.

Der Ultraschallgeber (siehe Figur 1A) kann beispielsweise nach dem in der US-A-4 326 274 beschriebenen Prinzip aufgebaut sein und aus einer kreisförmigen Scheibe 101 aus piezoelektrischem Material, z.B. Bariumtitanat, bestehen. Auf den sich gegenüberliegenden ebenen Flächen der Scheibe sind dünne Metallkontakte für den elektrischen Anschluß durch die Leiter 106 und 107 vorhanden. Die Scheibe ist von einem dämpfenden Material 102 umgeben und in eine Kapsel 100 eingeschlossen. Auf ihrer in der Figur nach unten gerichteten Seite hat die Scheibe eine Schutz- und Anpassungsschicht 103. Die Senderichtung des Schalls weist in der Figur nach unten.

Alternativ kann die Scheibe 101 so ausgebildet sein, daß ihre untere Fläche konkav ist, wie Figur 1B zeigt. Hierdurch wird eine fokussierende Wirkung und eine Verkleinerung der Breite des ausgesandten Schall-Leitstrahls erreicht. Die Anregung des Ultraschallgebers erfolgt durch Anlegung eines sehr kurzen elektrischen Spannungsimpulses. Die Scheibe beginnt dann mechanisch zu schwingen, beispielsweise mit einer Frequenz von 1 MHz, und sendet Schall mit dieser Frequenz aus. Die Schwingung wird durch das Dämpfungsmaterial schnell gedämpft und ist nach ca. 5 µs abgeklungen. Die Anregung wird mit einer Frequenz von beispielsweise 100 Hz - 1 kHz wiederholt, was von der Anwendungsart abhängt. Alternativ kann die Anregung mit Hilfe einer Sinusspannung erfolgen.

Das Medium zwischen dem Geber und dem Meßobjekt ist normalerweise Luft, doch kann die Meßanordnung nach der Erfindung auch in den Fällen angewendet werden, in denen das Medium ein anderes Gas oder eine Flüssigkeit ist.

Der Ultraschallgeber 3 wird zum Empfang der Echosignale benutzt. Alternativ können separate Glieder in Figur 1 verwendet werden, wobei ein Glied als Ultraschallgenerator und ein anderes zum Empfang der Echosignale benutzt wird.

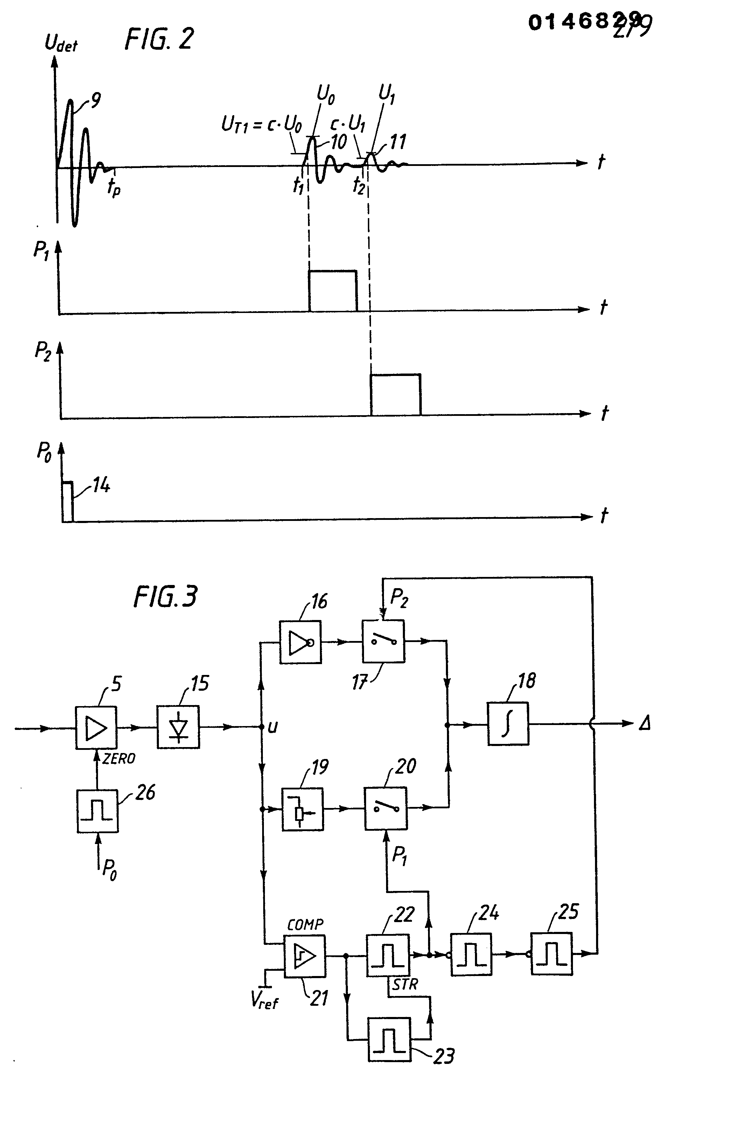

Figur 2 zeigt ein Beispiel für die in der Meßanordnung nach Figur 1 vorkommenden Signale. Das vom Ultraschallgeber 3 ausgesandte Signal 9 hat eine Dauer $t_p$. Im Zeitpunkt $t_1$ trifft der an der höher gelegenen Fläche 7 des Meßobjekts reflektierte Teil dieses Signals am Ultraschallgeber ein, und man erhält ein reflektiertes Signal, das nahezu dieselbe Kurvenform wie das ausgesandte Signal hat. Im Zeitpunkt $t_2$ erreicht das an der tiefer gelegenen Fläche 8 des Meßobjekts reflektierte Signal den Ultraschallgeber, und man erhält ein zweites Reflexionssignal 11. Da $t_2 - t_1 > t_p$ ist, sind die beiden Reflexionssignale völlig getrennt, wodurch es einfach wird, die Größe der Reflexionssignale relativ zueinander zu messen. Die Messung der Größe der Reflexionssignale kann auf viele verschiedene Arten vorgenommen werden, doch bei der hier behandelten Anwendung will man die Position der Kante 2 durch Absuchen mit dem Geber 3 finden, was bedeutet, daß man den Geber 3 in x-Richtung in Figur 1 verschiebt bis die beiden Reflexionssignale 10 und 11 gleich groß werden oder ein vorgegebenes Verhältnis zueinander annehmen. Im letztgenannten Fall wird der Tatsache Rechnung getragen, daß das zweite Reflexionssignal 11 infolge des längeren Laufweges des Ultraschalls zu der tiefer gelegenen Fläche 8 eine stärkere Dämpfung erfährt. Dies wird durch den vorgegebenen Verhältniswert kompensiert. In Figur 2 sind auch $P_1$ und $P_2$ zur Steuerung der Messung der Reflexionssignale 10 bzw. 11 eingetragen sowie Impulse $P_0$ zur Aktivierung des Ultraschallgebers.

Figur 3 zeigt ein Blockschaltbild für die Signalverarbeitungseinheit 6 in Figur 1. Das Ausgangssignal von dem Verstärker 5 in Figur 1 wird in einem Gleichrichter 15 gleichgerichtet und einem Negationsglied 16, einem Spannungsteiler 19 und einem Komparator 21 zugeführt. Der Verstärker 5 wird von dem Signal $P_0$ (siehe Figur 2) unter Aussendung des Ultraschallsignals (9 in Figur 2) dadurch fortgeschaltet, daß $P_0$ eine monostabile Kippstufe 26 mit einer Impulszeit aktiviert, die größer als $t_p$, jedoch kleiner als $t_1$ ist. Wenn das Reflexionssignal 10 von der höheren Meßobjektfläche 7 ankommt, schaltet der Komparator 21 und aktiviert zwei parallelgeschaltete monostabile Kippstufen 22 und 23. Die obere Kippstuffe 22 erzeugt das Signal P1 in Figur 2, und die untere Kippstufe 23 verhindert, daß die obere Kippstufe während des Zeitintervalles $(t_1, t_2 + t_p)$, das der Dauer des Ultraschallechos (10 + 11 in Figur 2) entspricht, wieder aktiviert wird. P1 schließt den Schalter 20 zwischen dem Spannungsteiler 19 und dem Integrator 18, und der Integrator integriert das am Spannungsteiler 19 geteilte und gleichgerichtete Reflexionssignal 10 während der Dauer des Signals P1. Wenn P1 verschwindet, endet die Integration. Der Integrator hält den integrierten Wert, und die Kippstufe 24 wird von der hinteren Flanke des Signals P1 aktiviert. Wenn diese Kippstufe 24 in den ursprünglichen Zustand zurückgeht, wird die folgende Kippstufe 25 aktiviert, welche den Impuls P2 in Figur 2 erzeugt. P2 schließt den Integrator 18 über den analogen Schalter 17 an das Negationsglied 16 an, und der Integrator inegriert mit negativem Vorzeichen das gleichgerichtete zweite Echosignal (11 in Figur 2) während der Dauer von P2. Dies bedeutet, daß der Integrator nach dem Impuls P2 einen Wert enthält, der $c \cdot \int u_1 dt - \int u_2 dt$ entspricht, wobei der Faktor c vom Spannungsteiler 19 bestimmt wird, und $u_1$ und $u_2$ den beiden Echosignalen 10 und 11 in Figur 2 entsprechen. Die Größe des Faktors c berücksichtigt die zusätzliche Dämpfung des von der tiefer gelegenen Fläche 8 reflektierten Signals infolge des längeren Laufweges. Der Wert des Faktors c wird auf die gewünschte Referenzpositon des Ultraschallgebers 3 relativ zu der Kante 2 geeicht, indem $\Delta$ nach den beiden Integrationen auf den Wert Null gesetzt wird.

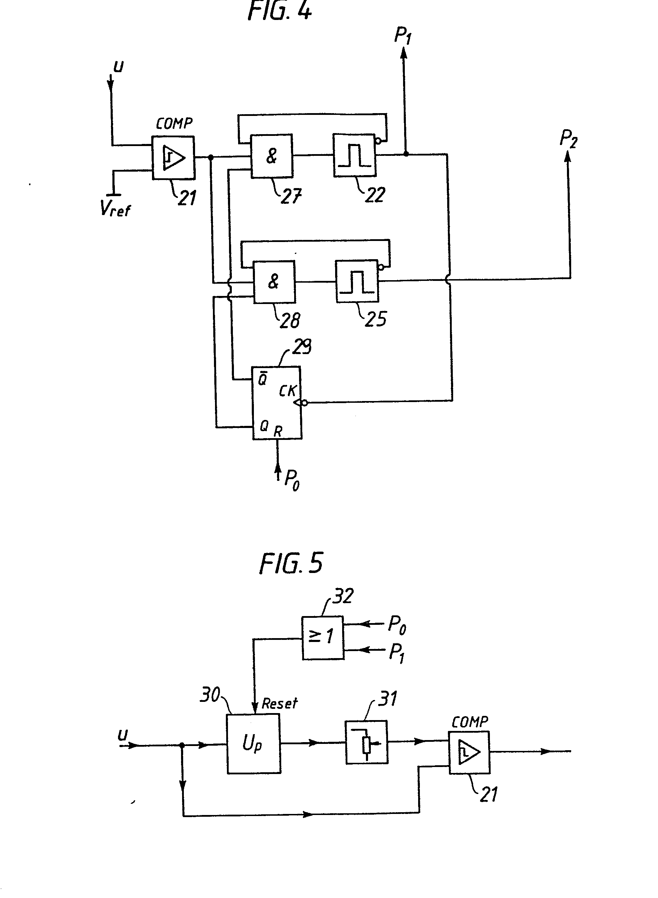

Wenn die Zeitdifferenz zwischen den beiden Echosignalen (10 und 11 in Figur 2) nicht im voraus bekannt ist, kann die Zeitverzögerungskippstufe 24 nicht angewendet werden; stattdessen muß der Komparator die beiden Echosignale abtasten. Wie dies erfolgt, zeigt Figur 4. Die darin gezeigten neuen Glieder ersetzten die Glieder 21 bis 25 in Figur 3. Der Impuls $P_0$, der bei der Aktivierung des Ultraschallkristalls erzeugt wird, stellt die bistabile Kippstufe 29 auf Null, wodurch das obere UND-Glied 27 eine 1 an seinem unteren Eingang bekommt. Wenn das erste Echosignal eintrifft, wird daher die obere Kippstufe 22 aktiviert und das Signal P1 erzeugt.

Durch Rückkopplung des negierten Ausgangs der Kippstufe 22 erhält man während der Dauer des Signals P1 keine unerwünschten Aktivierungen. Wenn das Signal P1 auf 0 zurückgeht, wird der Zustand der bistabilen Kippstufe 29 geändert, und der nächste Vergleich, der stattfindet, wenn das zweite Echosignal 11 eintrifft, aktiviert die untere Kippstufe und erzeugt das Signal P2. Das Komparatorniveau wird von einer Bezugsspannung $V_{ref}$ bestimmt, und zur genauen Messung bei großen Unterschieden in der Amplitude der beiden Echosignale 10 und 11 ist es erforderlich, eine adaptive Einstellung des Komparatorniveaus vorzunehmen. Wie dies gemacht werden kann, zeigt Figur 5. Die dort gezeigten Glieder (30 - 32) werden in den Signalweg vor dem Komporator 21 in Figur 3 eingefügt. Der Spitzenwert der Echosignale wird mit einem spitzenwerthaltenden Glied 30 gemessen, und das von dem Glied 31 abgeteilte Ausgangssignal des Gliedes 30 wird als Komparatorniveau für den Komparator 21 benutzt. Dies bedeutet im allgemeinen, daß ein Vergleich nach der ersten Spitze des Echosignals geschieht, wobei die Stärke des Echosignals ja bekannt ist. Das Glied 30 wird von $P_0$ und $P_1$ über das ODER-Glied 32 auf Null gestellt, wobei das Glied 30 bereitgehalten wird, mit der Spitzenwertmessung vor dem betreffenden Echosignal zu beginnen.

In der Signalverarbeitungseinheit nach Figur 3 wird der Vergleich zwischen der Größe der beiden Echosignale durch Bildung der Differenz aus diesen beiden Signalen vorgenommen. Alternativ kann der Vergleich durch Bildung des Quotienten aus den beiden Signalen oder auf andere Weise durchgeführt werden. Bei dem Vergleich können die beiden Echosignale auf gewünschte Weise berechnet werden, und ein Beispiel hierfür ist die in Figur 3 gezeigte Teilung des ersten Echosignals 10 zur Kompensation der durch die unterschiedlich langen Laufwege unterschiedlichen Dämpfung der beiden Echosignale.

In mehreren Zusammenhängen ist es von großem Interesse, die Laufzeiten für die Ultraschallsignale zu messen, was am einfachsten dadurch geschieht, daß man gemäß Patentanspruch 6 von den Impulsen $P_0$, $P_1$ und $P_2$ ausgeht. Der Impuls $P_0$ stellt hier die obere bistabile Kippstufe 33 auf Null, wodurch das UND-Glied 36 Rechenimpulse von dem Oszillator 35 zum Zähler 1 (38) hindurchläßt. Auf der vorderen Flanke des Impulses $P_1$ wird der Zustand der Kippstufe 33 geändert, und das Glied 36 stellt den Zähler 1 ab, der nun einen Wert für die Laufzeit zu der höheren Meßobjektfläche 7 anzeigt. Gleichzeitig startet P, über die Kippstufe 34 und das UND-Glied 37 den Zähler 2 (39), und sobald der Impuls $P_2$ erscheint, wird der Zähler 2 (39) gestoppt, der damit den Unterschied zwischen den Laufzeiten der beiden Echosignale anzeigt. Dieser Unterschied kann benutzt werden, um bei Kenntnis der Dämpfung des Ultraschalls in dem aktuellen Transmissionsmedium (normalerweise Luft) automatisch den Wert des Spannungsteilers 19 in Figur 3 einzustellen. Bei der Anwendung der Anordnung nach Figur 1 ist der Ultraschallgeber 3 auf einer Roboterhand montiert, und der Geber wird seitlich parallel zu den Meßobjektflächen 7 und 8 verschoben. Die Parallelität erhält man dadurch, daß der Geber so lange gedreht wird, bis eine maximale Intensität der Reflexionssignale erreicht wird, wobei der Ultraschall senkrecht auf die abzutastenden Flächen fällt. Bei der Suche nach der Kante gibt es daher drei Roboterregelschleifen (loops), eine, die den Drehwinkel $\Theta$ auf max. Reflexionssignal einstellt, eine, die den Drehwinkel $\varphi$ auf max. Reflexionssignal einstellt, und schließlich eine, die die Lage x verstellt, bis man den gewünschten Wert (normalerweise Null) des Ausgangssignals $\Delta$ der Signalverarbeitungseinheit 6 erhält.

Der Roboter kann beispielsweise ein Typ sein, wie er in der US-A-4 076 131, Fig. 1, der ASEA Information YB 110-31, und dem ASEA Journal 1982, Volume 55, No. 6, Seiten 139-150 beschrieben ist.

Der Roboter kann zum Schweißen oder für einen anderen Arbeitsvorgang längs der Kante 2 in Figur 1 verwendet werden und dann evtl. so programmiert werden, daß er sich längs der Fläche des Arbeitsstückes 1 in konstantem Abstand von diesem
und längs einer Bahn bewegt, von der man im voraus weiß, daß
sie ungefährt mit der Kante 2 übereinstimmt. Das Abweichungssignal $\Delta$ wird dann dem Steuersystem des Roboters
zugeführt, das so programmiert wird, daß es den Roboter in
Abhängigkeit von dem Signal $\Delta$ in seitlicher Richtung (x-
Richtung in Figur 1) bewegt, bis dieses Signal den Wert Null
oder einen anderen gewünschten Wert erreicht hat. Anschließend wird es durch das Steuersystem auf diesem Wert gehalten. Das bedeutet, daß der Roboter die Kante 2 zunächst
sucht und dann dieser folgt.

Für die oben beschriebene Einstellung der Orientierung des
Ultraschallgebers 3 kann beispielsweise das Ausgangssignal
des Gleichrichters 15 in Figur 3, das ein Maß für die
Amplitude der Echosignale ist, dem Steuersystem des Roboters
zugeführt werden, welches dann so programmiert wird, daß es
die Drehung der Roboterhand und des Gebers in den beiden in
Figur 1 gezeigten Achsen so steuert, daß die Amplitude des
Echosignals auf ihrem maximalen Wert gehalten wird.

Die Orientierung des Gebers durch seine Drehung kann durch
eine elektronische Steuerung der Richtung des ausgesandten
Schall-Leitstrahls ersetzt werden. Der Geber kann dann beispielsweise aus einer ein- oder zweidimensionalen Gruppe
(array) von Geberelementen aufgebaut sein, und die Richtung
des Leitstrahls wird dann durch Steuerung der relativen
Zeitlage der Anregungssignale gesteuert, die den einzelnen
Geberelementen zugeführt werden. Dies gilt auch für die
nachstehend beschriebenen Ausführungsbeispiele, die sich auf
eine Änderung der Richtung des Schall-Leitstrahls gründen.

Wenn die Normalrichtung der Meßobjektflächen bekannt ist,
können $\Theta$ und $\mathcal{Y}$ vorprogrammiert werden, wobei der Geber zur
Feineinstellung von $\Theta$ und $\mathcal{Y}$ benutzt wird. Wenn die
Orientierung des Meßobjektes nicht bekannt ist, d.h. wenn $\Theta$

und $\varphi$ unbekannt sind, kann ein Winkelmeßprinzip gemäß Figur 7 angewendet werden. Das getaktete Ultraschallsignal von dem Geber 3 wird von der Meßobjektfläche auf einen festen, eventuell drehbaren Reflektor 40 mit zwei Reflektorflächen 41 und 42 reflektiert, die durch eine Kante 43 getrennt sind, deren Höhe so gewählt wird, daß die Echosignale (10 und 11 in Figur 2) zeitlich gut getrennt sind. Wenn das Meßobjekt 7 und/oder der Geber 3 und/oder der Reflektor 40 relativ zueinander gedreht werden, erhält man ein Signal $\Delta$ (Figur 1), das ein Maß für den Winkel $\varphi$ ist. Für Roboteranwendungen kann dieses Prinzip zu einem Transduktorelement entsprechend Figur 8 weiterentwickelt werden. Der Geber 3 ist hier von einem Reflektorschirm mit mehreren Reflektorflächen (44a - 44n) umgeben. Wenn die Meßfläche 7 relativ zu dem Geber 3 und dem Reflektorschirm 40 gedreht wird, werden verschiedene Reflektorflächen verwendet, um den Ultraschall zu dem Geber 3 zurückzuführen. Hierbei werden Echosignale (vgl 10 und 11 in Figur 2) von naheliegenden Reflektorflächen herrühren, und die relative Größe dieser Echosignale gibt ein relatives Winkelsignal, das direkt zur Robotersteuerung verwendet werden kann. Um eine absolute Winkelmessung zu erhalten, was im Zusammenhang mit Robotern meistens nicht erforderlich ist, kann eine gleichzeitige Messung der Laufzeit des Ultraschalls durchgeführt werden, wobei man eine längere Laufzeit für einen größeren Winkel erhält. Für die praktische Anwendung wird der Reflektorschirm in zwei Dimensionen als Parabel oder als Kreuz ausgebildet, wobei verschiedene Reflektorflächenkonfigurationen in $\theta$- und $\varphi$-Richtung verwendet werden können (siehe Figur 1), so daß zwei Meßsignale $\Delta(\theta)$ und $\Delta(\varphi)$ erzeugt werden. Beispielsweise kann ein mit dem Reflektor 40 identischer Reflektor 45 senkrecht zu dem Reflektor 40 angeordnet werden, der jedoch einen größeren Abstand vom Meßobjekt erhält, so daß zuerst die Echosignale vom Reflektor 40 zur Erzeugung von $\Delta(\varphi)$ und dann die Echosignale vom Reflektor 45 zur Erzeugung von $\Delta(\theta)$ verarbeitet werden

kann. Die Kanten zwischen benachbarten Reflektorflächen sind zweckmäßigerweise unterschiedlich hoch, wodurch man verschiedene Zeitabstände zwischen den erfaßten Echoimpulsen erhält, und zwar abhängig davon, welche Kante von dem Leitstrahl getroffen wird, so daß man eine Information über die vom Leitstrahl getroffene Kante erhält.

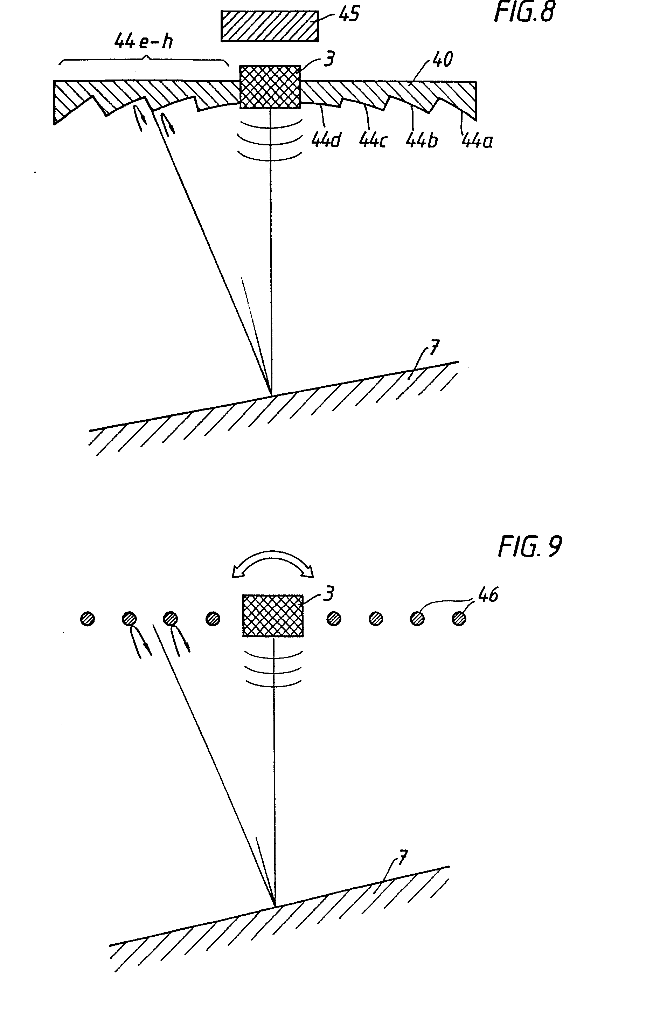

Selbstverständlich können die Reflektorschirme 40, 45 in vielen verschiedenen Arten mit einer mehr oder weniger stark fokusierenden Wirkung ausgeführt werden. Wenn sichere Reflexionssignale in einem großen Meßbereich hinsichtlich des Abstandes zwischen Ultraschallgeber und Meßobjekt 7 erwünscht sind, so kann ein diffuser Reflektor verwendet werden, der beispielsweise durch eine Gruppe (array) 46 von kreisrunden Reflektorelementen gemäß Figur 9 vervollständigt ist. Bei dieser Ausführungsform der Reflektorschirme muß man einen dem Anwendungsbereich angepaßten Ausgleich zwischen Meßbereich und Reflektoreffektivität finden.

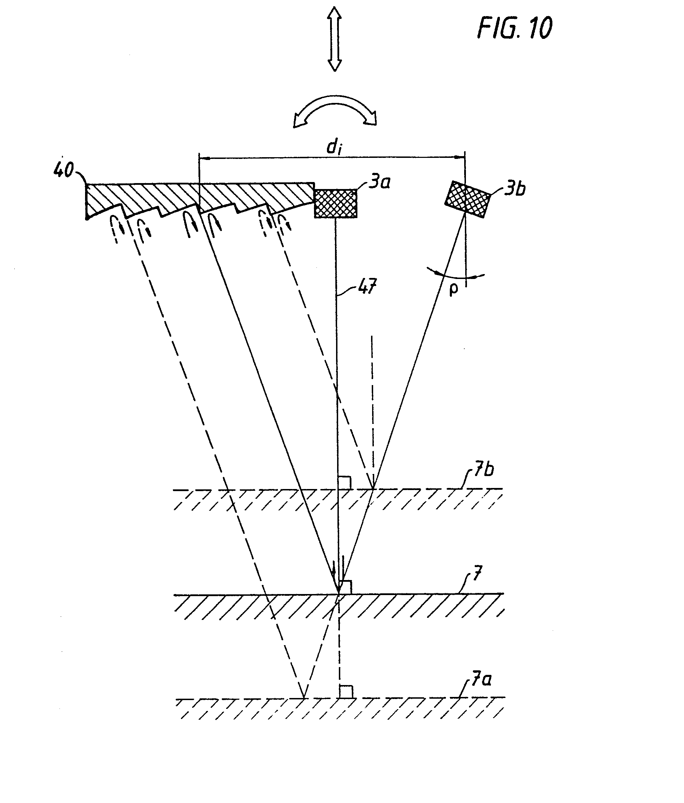

Dadurch, daß man den Reflexionswinkel der Ultraschallausbreitung relativ zu der Fläche des Meßobjektes messen kann, kann man auch den Abstand zu dem Meßobjekt durch trigonometrische Meßprinzipien messen, was in Figur 10 veranschaulicht ist. Hier gibt es einen ersten Geber 3a, der von dem Roboter benutzt wird, um die Normale 47 zu der Meßobjektfläche 7 zu finden. Wenn dies geschehen ist, wird ein zweiter Geber 3b zum Messen des Abstandes zu der Meßobjektfläche benutzt. Wenn sich die Meßobjektfläche nahe dem Geber (7b) befindet, wird das Ultraschallsignal von dem Geber 3b von dem rechten Teil des Reflektorschirms 40 reflektiert, und wenn sich die Meßobjektfläche weit von dem Geber (7a) entfernt befindet, erhält man die Reflexion von dem linken Teil des Schirms 40. Den Abstand zwischen beispielsweise dem Geber 3a und dem Meßobjekt erhält man aus dem bekannten Winkel $\rho$ und der gemessenen Laufzeit. Es gibt mehrere andere Möglichkeiten, um diese trigonometrische Messung

27.11.1984
01 46 829

durchzuführen. Beispielsweise kann der Geber 3a sowohl zum Suchen der Normalen 47 der Meßobjektfläche 7 benutzt werden als auch zum trigonometrischen Messen des Abstandes zu der Meßobjektfläche 7, indem der Geber 3a mit Hilfe des Roboters in eine Winkelstellung zur Meßobjektfläche gebracht wird.

Bei der in Figur 10 gezeigten Ausführungsform der Erfindung können die Kanten zwischen benachbarten Teilflächen des Reflektors 40 zweckmäßigerweise unterschiedlich hoch seien, wodurch von dem Steuersystem leicht festgestellt werden kann, welche der Kanten von dem Leitstrahl getroffen wird. Der Abstand zwischen dieser Kante und dem Geber ist dann bekannt, ebenso wie der Winkel $\varrho$ in der Figur. Hierdurch wird eine Bestimmung des Abstandes zwischen dem Geber 3a und der Meßobjektfläche 7 ermöglicht, der von der Schallgeschwindigkeit in dem zwischen Geber und Meßobjektfläche vorhandenen Medium völlig unabhängig ist. Dies ist ein wesentlicher Vorteil, beispielsweise bei großen Druck- oder Temperaturschwankungen im Medium. Falls erwünscht, kann aus dem so gemessenen Abstand und der gemessenen Laufzeit der aktuelle Wert der Schallgeschwindigkeit im Medium bestimmt werden und beispielsweise zur Korrektur von nach dem Echolotprinzip arbeitenden Abstandsmeßgeräten verwendet werden. Die in Figur 10 gezeigte Anordnung kann ohne Laufzeitbestimmung zur Konstanthaltung des Abstandes zwischen Geber und Meßobjekt verwendet werden, wobei das Signal $\Delta$ in Figur 1 ein Maß für die Abweichung von einem vorgegebenen Abstand ist.

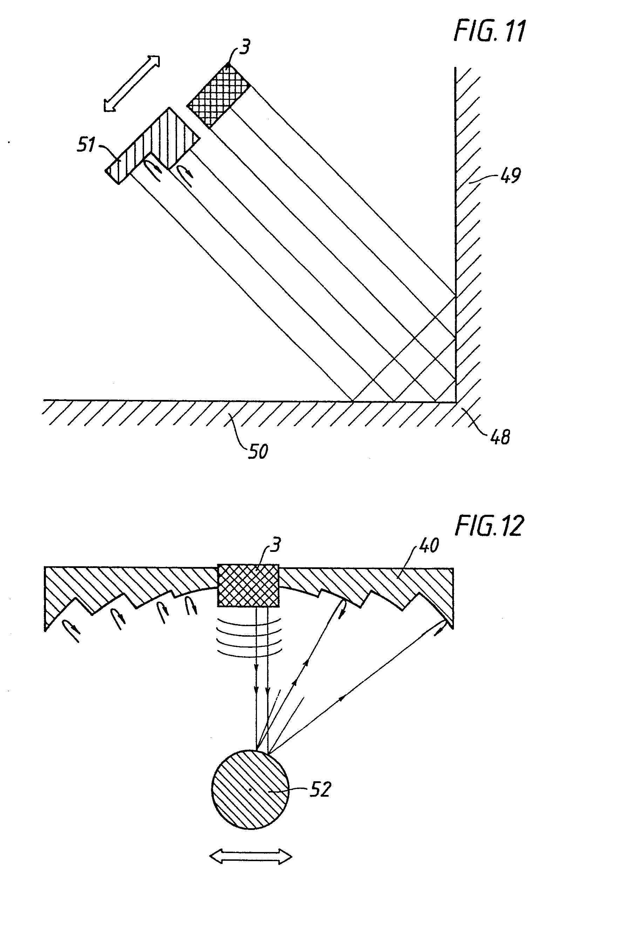

Mit der Meßanordnung gem. Figur 1 kann somit die Lage, der Winkel und der Abstand zwischen Kanten und Meßobjektflächen einerseits und einem Ultraschallgeber andererseits durchgeführt werden. Dasselbe Meßprinzip kann angewendet werden, wenn die Form des Meßobjekts anders beschaffen ist als die bisher behandelte Form, die aus einer oder mehreren ebenen parallelen Meßflächen besteht, die durch eine bzw. mehrere Kanten getrennt sind. So zeigt Figur 11, wie beispielsweise die Lage einer Ecke 48, die von zwei senkrecht aufeinander stehenden Ebenen 49 und 50 gebildet wird, durch die Meßanordnung erfaßt werden kann. Neben dem Geber 3 ist ein Reflektorelement 51 mit zwei Reflektorflächen zur Erzeugung von zwei zeitlich getrennten Echosignalen angeordnet. Die Lage der Kante (Ecklinie) zwischen den Reflektorflächen wird so eingestellt, daß $\Delta = 0$ ist ( siehe Figur 1 ), wenn Geber und Reflektor die gewünschte Position relativ zur Ecke haben. Bei stumpfen und spitzen Winkel wird eine entsprechende Eichung der Lage des Reflektorelements 51 relativ zum Geber 3 vorgenommen. Wenn ein Reflektorelement mit mehreren Reflektorflächen (siehe Figur 8) verwendet wird, können beliebige Eckwinkel vorkommen, bzw., wenn der Eckwinkel bekannt ist, kann eine trigonometrische Messung des Abstandes zur Ecke gleichzeitig mit der Positionsmessung vorgenommen werden.

Zur Messung an Gegenständen mit komplexeren Formen kann ein Reflektorschirm der in Figur 8 gezeigten Art nicht nur Informationen über die Lage des Meßobjektes liefern, sondern auch über dessen Form, was durch die Messung des Eckwinkels in Figur 11 und durch den Stangen- oder Rohrdurchmesser in Figur 12 beispielhaft gezeigt ist. Je größer der Durchmesser der Stange 52 in Figur 12 ist, desto größer wird der Anteil des von den zentralen Reflektorflächen des Reflektorschirms 40 reflektierten Schalls. Auf die gleiche Weise können die Form und die Lage von Kanten, Nuten, Löcher, Verbindungen, Flanschen, Graten, Leimstreifen usw. gemessen werden.

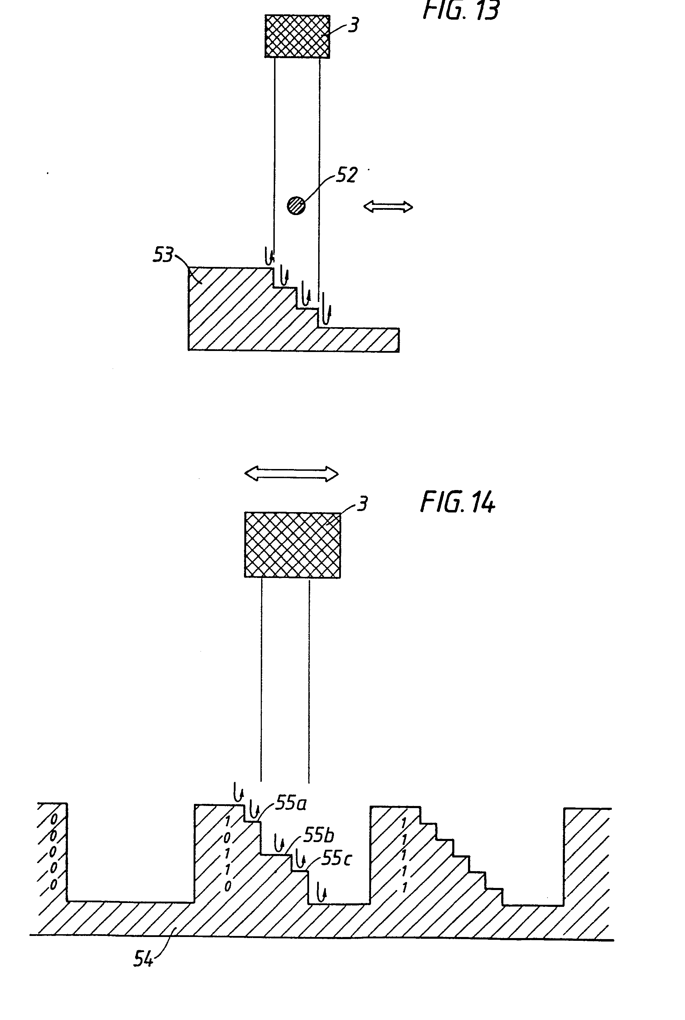

Um die Informationen bei der Messung der Form zu vergrößern, kann gemäß Figur 13 ein Reflektorschirm 53 auf der anderen Seite des Meßobjektes 52 angeordnet werden, durch den gleichzeitig die Transmission gemessen wird. Dies kann beispielsweise zur Messung des Durchmessers von Draht, Wellen, Stangen und Löchern verwendet werden. Wenn zwischen dem Geber 3 und dem Reflektor 53 kein Meßobjekt vorhanden ist, so erhält man Echosignale von allen vier Flächen des Reflektors. Beim Vorhandensein eines Meßobjektes werden von diesem eine oder mehrere Flächen verdeckt, so daß in der vom Geber empfangenen Echoimpulsfolge ein oder mehrere Impulse fehlen, und zwar um so mehr, je größer die Abmessung des Meßobjektes ist. Die Lage des Meßobjektes wird dadurch bestimmt, welche Echoimpulse fehlen. Die Meßgenauigkeit kann durch die Anzahl der Stufen des Reflektors 53 vergrößert werden. Eine zweidimensionale Messung der Ausdehnung des Meßobjektes ist beispielsweise dadurch möglich, daß ein weiterer Reflektor angeordnet wird, der mit dem Reflektor 53 identisch ist, jedoch relativ zu diesem um 90 Grad versetzt ist.

Wenn ein Industrieroboter eine Kante, ein Loch o.dgl. an einem Gegenstand aufsuchen soll, so muß eine gewisse $a$ priori Information über die Lage und das Aussehen des Gegenstandes vorhanden sein. Gibt es eine solche Information nicht, so kann man den Gegenstand oder einen Bezugsort mit der erforderlichen Information kennzeichnen. Hierzu kann auch die in Figur 1 beschriebene Meßanordnung gemäß Figur 14 verwendet werden. Das Meßobjekt 54 hat hier ein Profil mit mehreren Reflektorflächeniveaus, wobei jedes Niveau einer Stelle einer binären Zahl entspricht. Wenn alle Niveaus vorhanden sind, treffen in allen Zeitintervallen Reflexionssignale ein, was als die binäre Zahl 11111 gedeutet wird, während ein fehlendes Reflexionssignal als 0, z.B. in der binären Zahl 10110 gemäß Figur 14, gedeutet wird.

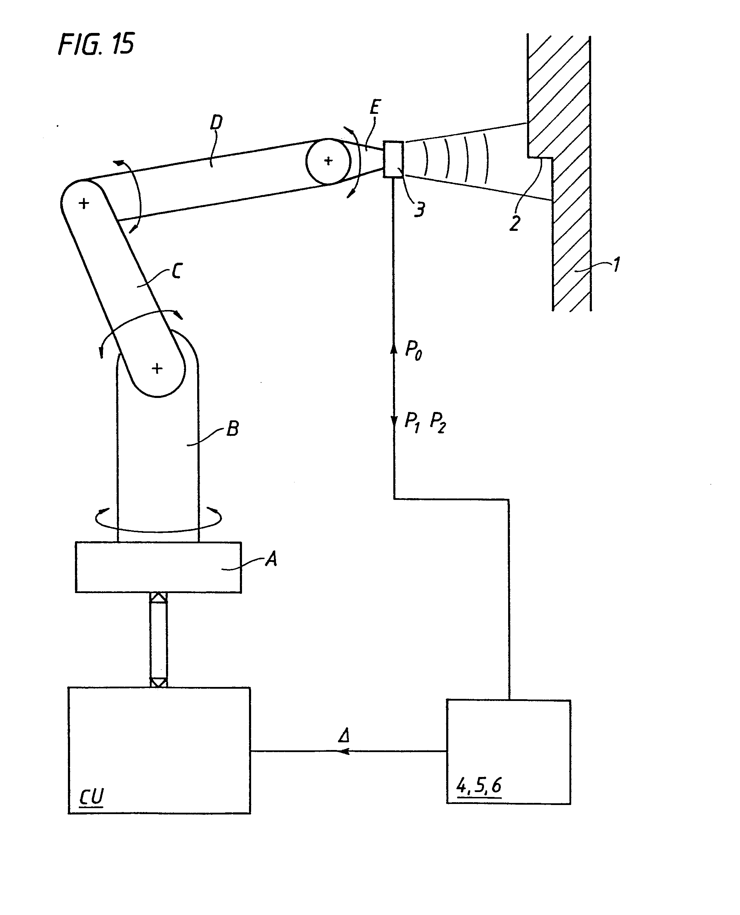

Figur 15 zeigt vollständiger eine Industrieroboteranordnung der mit einer Meßanordnung nach der Erfindung arbeitet, die anhand von Figur 1 beschrieben wurde. Ein Industrieroboter besteht aus einem Sockel A, einer Säule B, die relativ zu dem Sockel um eine senkrechte Achse drehbar ist, einem unteren Arm C, der relativ zu der Säule um eine horizontale Achse drehbar ist, einem oberen Arm D, der relativ zu dem unteren Arm um eine horizontale Achse drehbar ist, sowie einer Hand E, die relativ zu dem oberen Arm um eine horizontale Achse drehbar ist. Die Hand kann relativ zu dem oberen Arm in einem oder zwei weiteren Freiheitsgraden beweglich sein. Eine Steuereinheit CU ist mit dem Roboter selbst verbunden. Von der Steuereinheit werden Antriebssignale an die Antriebsmotoren für die Drehachsen des Roboters übertragen, und von dem Roboter werden die von Lagegebern an den Drehachsen des Roboters erfaßten Signale an die Steuereinheit geliefert. Die Steuereinheit enthält einen Programmspeicher. Bei seiner Programmierung wird der Roboter manuell in mehrere Punkte der zu durchlaufenden Bahn gefahren, wobei die Koordinaten dieser Punkte, wie auch die übrigen Informationen, beispielsweise die gewünschte Bahngeschwindigkeit sowie die gewünschten Arbeitsvorgänge der Hand, im Programmspeicher gespeichert werden. Der Roboter und seine Steuereinheit können entsprechend den oben in Verbindung mit Figur 1 genannten Druckschriften aufgebaut sein.

Die Roboterhand E trägt einen Geber, der mit den Steuer- und Signalverarbeitungseinheiten 4, 5, 6 (siehe Figur 1) verbunden ist. Außerdem kann die Hand ein nicht dargestelltes Arbeitswerkzeug, zum Beispiel eine Schweißpistole, tragen. Von der letzteren wird das Signal $\Delta$ abgegeben, welches die Lageabweichung des Gebers 3 und damit der Roboterhand in x-Richtung relativ zur Kante 2 des Meßobjektes 1 anzeigt. Dieses Signal wird der Steuereinheit CU des Roboters zugeführt, welche die Hand des Roboters in Abhängigkeit des genannten Signals derart in x-Richtung bewegt, daß das Signal auf Null gebracht und gehalten wird.

-17-

Patentansprüche

1. Ultraschallmeßanordnung zur Bestimmung einer geometrischen Eigenschaft, wie z.B. einer Lage oder einer Winkelstellung eines Objektes (1) in einem gas- oder flüssigkeitsförmigen Medium mit zumindest einem Ultraschallgeber (3) zum Aussenden von Ultraschallsignalen und zur Erfassung von vom Objekt reflektierten Echosignalen mit Steuervorrichtungen (4) zur Steuerung des Ultraschallgebers und mit einer Signalverarbeitungseinheit (6) zur Auswertung der empfangenen Reflexionssignale, d a d u r c h   g e - k e n n z e i c h n e t, daß der Ultraschallgeber Ultraschallimpulsee auszusenden vermag, die auf mindestens zwei unterschiedlich weit vom Geber liegende reflektierende Flächen treffen, und daß die Signalverarbeitungseinheit imstande, ist für einen ausgesandten Schallimpuls von den Flächen reflektierte Echoimpulse (10, 11) zu erfassen, die Größe der beiden empfangenen Echoimpulse (10, 11) zu vergleichen und in Abhängigkeit von dem Vergleich ein Signal (Δ) zu erzeugen, welches ein Maß für die Lage oder die Winkelstellung des Objektes relativ zum Geber ist.

2. Ultraschallmeßanordnung nach Anspruch 1, d a d u r c h   g e k e n n z e i c h n e t, daß die Signalverarbeitungseinheit Glieder (19) enthält, welche den durch die unterschiedlich langen Laufwege verursachten Unterschied in der Größe der Echoimpulsee (10, 11) kompensieren.

3. Ultraschallmeßanordnung nach Anspruch 1 oder 2 zur Bestimmung der Lage des Gebers (3) in seitlicher Richtung relativ zu einer Kante (2) zwischen zwei in verschiedenen Abständen von dem Geber liegenden Flächen (7, 8) eines Objektes, d a d u r c h   g e k e n n z e i c h n e t, daß die Signalverarbeitungseinheit in Abhängigkeit von dem Vergleich ein Signal (Δ) abzugeben vermag, das ein Maß für die Lage des Objektes relativ zu dem Geber in einer Richtung (x) ist, die eine Komponente senkrecht zur Richtung der ausgesandten Schallimpulse hat.

4. Ultraschallmeßanordnung nach einem der vorhergehenden Ansprüche, d a d u r c h   g e k e n n z e i c h n e t, daß die Länge ($t_p$) der ausgesandten Impulse im Verhältnis zu dem Unterschied in der Laufzeit ($t_2 - t_1$) zwischen den von den beiden Flächen (7, 8) kommenden Echoimpulseen so gewählt ist, daß die Echoimpulse zeitlich voneinander getrennt sind.

5. Ultraschallmeßanordnung nach einem der vorhergehenden Ansprüche, d a d u r c h   g e k e n n z e i c h n e t, daß sie einen im Anschluß an den Geber angeordneten Schallreflektor (40, 45, 46, 51) mit mindestens zwei reflektierenden Flächen enthält, der im Verhältnis zu dem Geber (3) so angeordnet ist, daß Ultraschallimpulse des Gebers von dem Objekt (7) auf den Reflektor und von diesem über das Objekt wieder auf den Geber reflektiert werden, und daß die refletierenden Flächen so angeordnet, daß sie Echoimpulse mit unterschiedlichen Laufzeiten liefern.

6. Ultraschallmeßanordnung nach Anspruch 5, d a d u r c h   g e k e n n z e i c h n e t, daß der Reflektor (z.B. 40) im Verhältnis zu der Impulsdauer der von dem Geber (3) ausgesandten Schallimpulse so ausgeführt ist, daß zeitlich getrennte Echoimpulse von zwei nahe beieinanderliegenden Flächen (41, 42) des Reflektors geliefert werden.

7. Ultraschallmeßanordnung nach Anspruch 5 oder 6, d a - d u r c h   g e k e n n z e i c h n e t, daß der Reflektor (40, 46, 51) fest mit dem Geber (3) verbunden ist.

8. Ultraschallmeßanordnung nach Anspruch 5 bis 7, d a - d u r c h   g e k e n n z e i c h n e t, daß der Reflektor

(46) aus einer Gruppe von getrennten refeltierenden Körpern besteht.

9. Ultraschallmeßanordnung nach einem der Ansprüche 5 bis 8, d a d u r c h   g e k e n n z e i c h n e t, daß die Signalverarbeitungseinheit die Größe der von naheliegenden Flächen des Reflektors (40) erhaltenen Echosignale zur Bildung eines Maßes ($\Delta$) für die Winkelstellung des Objektes (7) relativ zum Geber (3) und dem Reflektor (40) zu vergleichen vermag.

10. Ultraschallmeßanordnung nach Anspruch 9, d a d u r c h g e k e n n z e i c h n e t, daß mehrere reflektierende Vorrichtungen (40,45) vorhanden sind, von denen jede mehrere reflektierende Flächen hat, die hintereinander in zwei Richtungen angeordnet sind, die einen Winkel miteinander und mit der Aussenderichtung für die Schallimpulse des Gebers bilden, und daß die Signalverarbeitungseinheit durch den Vergleich der Größe der Echoimpulse Signale zu bilden vermag, die ein Maß für die Winkelstellung des Objektes (7) in zwei Freiheitsgraden ($\theta,\varphi$) relativ zum Geber und zu den reflektierenden Vorrichtungen sind.

11. Ultraschallmeßanordnung nach einem der vorhergehenden Ansprüche, d a d u r c h   g e k e n n z e i c h n e t, daß Vorrichtungen (33 - 39) zur Bestimmung der Laufzeit zumindest eines der empfangenen Echosignale vorhanden sind.

12. Ultraschallmeßanordnung nach einem der Ansprüche 5 bis 11, d a d u r c h   g e k e n n z e i c h n e t, daß die reflektierenden Flächen des Reflektors (40) in verschiedenen Abständen von dem Geber (3) in einer Richtung angeordnet sind, die einen Winkel mit der Normalen (47) der reflektierenden Fläche des Objektes (7) bildet, daß der Geber Schallimpulse auf den Reflektor über das Meßobjekt in einer Richtung sendet, die einen bekannten Winkel mit der genannten Normalen bildet, und daß die Signalverarbeitungseinheit den Abstand durch Vergleich der Größe der Echosignale von nahe beieinanderliegenden Reflektorflächen des Reflektors ermittelt vermag.

13. Ultraschallmeßanordnung nach einem der vorhergehenden Ansprüche, d a d u r c h g e k e n n z e i c h n e t, daß zur Bestimmung der Lage eines Objektes (52), ein vom Geber (3) aus gesehen hinter dem Objekt angeordneter Reflektor mit mehreren in verschiedenen Abständen vom Geber angeordneten Reflektorflächen vorhanden ist und daß die Signalverarbeitungseinheit aus den Echosignalen von den verschiedenen Flächen ein Maß für die Lage des Objektes bildet.

14. Verwendung einer Ultraschallmeßanordnung nach einem der vorhergehenden Ansprüche für einen Industrieroboter, d a - d u r c h g e k e n n z e i c h n e t, daß der Geber (3) an der Roboterhand montiert ist, und daß ein Ausgangssignal von der Signalverarbeitungseinheit dem Steuersystem des Roboters zugeführt wird zur Steuerung der Roboterhand in mindestens einem Freiheitsgrad in Abhängigkeit des genannten Ausgangssignal.

15. Verwendung nach Anspruch 14 zum Aufsuchen und/oder zum Folgen einer Innen- oder Außenkante (2), an der zwei reflektierende Flächen (7,8) des Objektes zusammenstoßen, d a d u r c h g e k e n n z e i c h n e t, daß die Signalverarbeitungseinheit die Größe der Echosignale von den beiden Flächen vergleicht und in Abhängigkeit des Vergleichswertes ein Ausgangssignal ($\Delta$) bildet, das dem Steuersystem des Roboters zugeführt wird zur Steuerung der Bewegung der Roboterhand in einer Richtung, die einen Winkel mit der Richtung der genannten Kante bildet.

16. Verwendung nach Anspruch 14 zur Orientierung des Gebers (3) in einer gewünschten Lage (Winkelstellung) relativ zu

einem Objekt (7), d a d u r c h   g e k e n n z e i c h -
n e t, daß zumindest ein Reflektor (40) auf solche Weise von
der Roboterhand getragen wird, daß vom Geber (3) ausgesandte
Schallimpulse den Reflektor nach ihrer Reflexion am Objekt
erreichen, daß der Reflektor mehrere separate reflektierende
Flächen (44a - h) hat, daß die vom Geber empfangenen Schallimpulse durch Reflexion am Objekt wieder zu dem Geber
zurückgelangen und daß die Signalverarbeitungseinheit die
Größe der von verschiedenen Flächen des Reflektors empfangenen Echosignale vergleicht und in Abhängigkeit von dem
Vergleich ein Signal ($\Delta$) zur Steuerung der Drehbewegung der
Roboterhand bildet.

## FIG.1

## FIG.1A

## FIG.1B

FIG. 2

FIG. 3

## FIG. 4

## FIG. 5

0146829
479

## FIG. 6

## FIG. 7

FIG.8

45

44 e-h

3

40

44d  44c  44b  44a

7

FIG. 9

3

46

7

FIG. 10

*FIG. 11*

*FIG.12*

21 511 PF

FIG. 13

*3*

*52*

*53*

FIG. 14

*3*

*55a*

*55b*

*55c*

*54*

FIG. 15